# EUROPÄISCHE PATENTSCHRIFT

(11) **EP 2 822 790 B1**
(45) Veröffentlichungstag und Bekanntmachung des Hinweises auf die Patenterteilung: **01.08.2018**
(21) Anmeldenummer: 13708157.6
(22) Anmeldetag: 08.03.2013
(51) Int. Cl.: B60H 1/32, F24D 11/00, F25B 47/00, F25D 21/04

(54) **VORRICHTUNG UND VERFAHREN ZUR VEREISUNGSVERMEIDUNGSREGELUNG FÜR WÄRMEPUMPENVERDAMPFER**
DEVICE AND METHOD FOR ICING PREVENTION REGULATION FOR HEAT PUMP EVAPORATORS
DISPOSITIF ET PROCÉDÉ DE RÉGLAGE POUR ÉVITER LA FORMATION DE GIVRE POUR DES ÉVAPORATEURS DE POMPE À CHALEUR

(30) Priorität: 09.03.2012 DE 102012102041
(43) Veröffentlichungstag der Anmeldung: 14.01.2015
(73) Patentinhaber: Halla Visteon Climate Control Corporation, Daejeon 306-230 (KR); Audi AG, 85045 Ingolstadt (DE)
(72) Erfinder: SCHMITZ, Engelbert, 50129 Bergheim (DE); HEYL, Peter, 50999 Köln (DE); GRAAF, Marc, 47798 Krefeld (DE); REBINGER, Christian, 86356 Neusäß (DE); SCHROEDER, Dirk, 85077 Manching (DE)
(74) Vertreter: Sperling, Thomas
(86) Internationale Anmeldenummer: PCT/EP2013/054679
(87) Internationale Veröffentlichungsnummer: WO 2013/132046

(56) Entgegenhaltungen:
- WO-A1-99/61135
- DE-A1-102011 051 285
- US-A- 5 065 593
- US-A- 5 187 944
- US-A- 5 992 163
- US-A1- 2009 277 196

## Beschreibung

Die Erfindung betrifft eine Vorrichtung und ein Verfahren zur Vereisungsvermeidungsregelung für Wärmepumpenverdampfer in Klimaanlagen von Fahrzeugen.

Die Erfindung ist angesiedelt auf dem Gebiet der Wärmepumpen mit Umgebungsluft als Wärmequelle. Der Einsatz von Wärmepumpen mit Umgebungsluft als Quelle zur Beheizung des Fahrgastinnenraums wurde von mehreren Instituten, Fahrzeugherstellern und Zulieferern untersucht. Beim Betrieb von Wärmepumpen mit der Quelle Umgebungsluft bei Kältemitteltemperaturen, insbesondere bei beziehungsweise unter 0 °C, besteht die Gefahr des Vereisens auf der Luftseite des Wärmepumpenverdampfers.

Die Vereisung eines Verdampfers ist ein physikalischer Vorgang, der wesentlich von folgenden Faktoren beeinflusst wird:
- der Oberflächentemperatur des Verdampfers,
- dem Taupunkt der den Verdampfer überströmenden Luft und
- der Strömungsgeschwindigkeit der über den Verdampfer geleiteten Luft.

Bei der Abkühlung von feuchter Luft wird entweder Luftfeuchtigkeit auskondensiert, die bei Temperaturen von unter 0 °C Eiskristalle ausbildet, welche zu einer Eisschicht zusammenwachsen. Auch kann Luftfeuchtigkeit desublimieren und eine Reifschicht bilden. Wenn der Verdampfer weiter bei diesen Bedingungen betrieben wird, wird die Eis-/Reifschicht wachsen und den luftseitigen Strömungsquerschnitt des Verdampfers verringern. Gleichzeitig wird der Wärmeübertragungswiderstand zwischen Luft und Verdampferoberfläche vergrößert. Bei gleicher Leistung des Lüfters führt dies aufgrund der höheren Druckverluste zu einer verringerten Strömungsgeschwindigkeit der über den Verdampfer geleiteten Luft, die die Reifbildung begünstigt. Der Verdampfer wird schließlich mit Reif beziehungsweise Eis zuwachsen. Die Anlage kann nicht mehr weiter betrieben werden, wenn der Verdampfer zugefroren ist: Der Saugdruck würde immer weiter absinken. Infolgedessen besteht ein weiterer Nachteil darin, dass zusätzlicher Aufwand an Wärmeenergie nötig ist, um den Verdampfer abzutauen.

Im Stand der Technik wird das Vereisen des Verdampfers dadurch vermieden, dass die Wärmepumpe bei Umgebungslufttemperaturen unter 0 °C, beim Toyota Prius plug in Hybridausführung bereits sogar unter + 5 °C, nicht betrieben wird. Zum Abtauen des Wärmepumpenverdampfers wird der Kältekreislauf umgeschaltet und im Klimaanlagen-Modus (AC-Betrieb) betrieben. Dabei übernimmt der Wärmepumpenverdampfer die Funktion des Kondensators und wird mit heißem Kältemittel durchströmt. Eis, das sich auf der Außenseite des Wärmepumpenverdampfers angelagert hat, wird dabei geschmolzen, und der vereiste, als Kondensator betriebene Wärmepumpenverdampfer wird aktiv abgetaut. Der Nachteil dieser Variante besteht darin, dass während der Phase des aktiven Abtauens nicht nur die Wärmepumpenfunktion nicht zur Verfügung steht, sondern darüber hinaus auch die Zuluft für den Innenraum über den Verdampfer in der Klimaanlage zusätzlich gekühlt wird. Hierdurch wird das Defizit in der Aufheizleistung noch verstärkt. Dieser Nachteil kann nur durch eine Erhöhung der Komplexität der Kältekreislaufverschaltung abgemildert werden.

Ein weiterer Nachteil besteht darin, dass in der Phase des vereisten AC-Kondensators vor dem Motorkühler der Luftstrom und damit die Motorkühlung nur unzureichend gewährleistet ist.

Ein Verfahren zum Betreiben einer Wärmepumpe bei niedrigen Umgebungslufttemperaturen für einen Heizkreis ist in der Druckschrift WO 2009/094691 A1 beschrieben, wobei eine dort beschriebene Wärmepumpe einen Verdampfer, einen Verdichter, einen Verflüssiger, ein Expansionsventil, das sich zwischen dem Austritt des Verflüssigers und dem Eintritt des Verdampfers befindet, umfasst. Der Verdampfer, der Verdichter, der Verflüssiger, das Expansionsventil und wiederum der Verdampfer sind durch Leitungen miteinander verbunden. Die Kältemittelflüssigkeit nimmt im Verdampfer die Wärme aus der Umgebungsluft auf und verdampft. Der Verdichter verdichtet den Kältemitteldampf mit mechanischer Energie und erhöht dadurch Druck und Temperatur. Im Verflüssiger kondensiert das Kältemittel und erwärmt das Medium des Heizkreises.

Im Expansionsventil werden der Druck und die Temperatur der Kältemittelflüssigkeit durch Öffnen des Ventils abgebaut. Im Anschluss strömt die Kältemittelflüssigkeit wieder in den Verdampfer. Dort wird die durch den Verdampfer strömende Luft abgekühlt und das zweiphasige Kältemittel verdampft.

Dem Verdampfer ist ein Lüfter zugeordnet, der mit einer Steuereinheit in Verbindung steht, die selbst eine signaltechnische Verbindung mit dem Verdichter und einem Temperatursensor aufweist. Die Wärmepumpe weist einen regelmäßig oder vorübergehend von der Steuereinheit unterbrechbaren Kältemittelfluss durch den Verdampfer auf. Bei normalem Betrieb saugt der Lüfter Umgebungsluft über eine Seite des Verdampfers an, wodurch die Umgebungsluft über die Verdampferoberfläche geleitet und durch Aufnahme von Wärme aus der Umgebungsluft Kältemitteldampf erzeugt wird. Im Fall einer Vereisung des Verdampfers, wobei die sehr niedrigen Temperaturen im Vereisungsbereich von dem Temperatursensor angezeigt werden, wird der Kältemittelfluss im Verdichter durch die Steuereinheit gestoppt. Durch die Steuereinheit wird danach die Richtung des Verdampfers auf die Verdampferoberfläche auftreffende Luft von der Seite aus umgekehrt, so dass wärmere Luft auf die Verdampferoberfläche geleitet und der Verdampfer enteist wird.

Ein Nachteil besteht darin, dass bei Vereisung der Kältemittelfluss unterbrochen werden muss und ein größerer Elektroenergieaufwand zum Abtauen notwendig ist. Bei Elektrofahrzeugen ist außerdem keine warme Luft vorhanden. Während der Abtauphase steht die Wärmepumpe nicht zur Verfügung. Es muss ein redundantes Heizsystem konzipiert werden.

Ein Verfahren und eine Einrichtung zum Steuern des Kältemitteldrucks in einer Klimaanlage sind in der Druckschrift US 2006/0288716 A beschrieben, wobei die Einrichtung aus einem Verdichter, einem Verflüssiger und einem Verdampfer besteht, die in einem geschlossenen Kältemittelkreislauf angeordnet sind. Der Verflüssiger ist zumindest in zwei ventilgesteuerte Einheiten unterteilt. Bei Vereisungsgefahr wird zumindest eine Einheit des Verflüssigers abgeschaltet. Mittels eines zusätzlichen Ventils wird Hochdruck in den Verdampfer entspannt, so dass das Druckniveau im Verdampfer steigt und das Vereisungsrisiko geringer wird.

Weiter ist aus dem Stand der Technik eine Regelung zur Vermeidung der Vereisung durch die Regelung des Austrittstemperaturniveaus des Kältemittels aus dem Wärmepumpenverdampfer bekannt. Beim Einsatz des Kältemittels R134a (1,1,1,2-Tetrafluorethan) oder von Kältemitteln mit ähnlichen Stoffdaten, wie zum Beispiel R1234yf (2,3,3,3-Tetrafluorpropen), besteht ein größerer Verstärkungsfaktor zwischen dem Druckverlust im Wärmepumpenverdampfer und der Oberflächentemperatur des Verdampfers (durch den Druckverlust hervorgerufene Temperaturgleit im Verdampfer) als bei Anwendung des Kältemittels R744 (CO₂). Wenn das Expansionsventil zu weit geöffnet ist, steigt der Druckverlust im Wärmepumpenverdampfer an und die Oberflächentemperatur des Wärmepumpenverdampfers wird sich lokal im Bereich des Kältemittelaustritts aus dem Verdampfer verringern. Damit vermieden wird, dass dies zu einer lokalen Vereisung führen kann, wird durch einen Regler der Querschnitt des Expansionsventils geschlossen, wenn die ermittelte Sättigungstemperatur des Kältemittels zu niedrig liegt, aber gleichzeitig keine Überhitzung festgestellt wird. In diesem Fall muss außerdem der Kältemittelmassenstrom reduziert werden. Bei einem elektrischen Verdichter geschieht das durch die Reduktion der Verdichterdrehzahl. Bei einem extern geregelten mechanischen Hubkolbenverdichter erfolgt dies durch die Ansteuerung eines Regelventils in der Form, dass eine Verringerung des Verdichterhubs erzielt wird. Die Regelung des Austrittstemperaturniveaus kann, vor allem bei Verwendung der Kältemittel R134a und R1234yf, dazu führen, dass aufgrund der Druckverluste im Wärmepumpenverdampfer am Eintritt des Wärmepumpenverdampfers sich eine Kältemitteltemperatur über der Umgebungslufttemperatur einstellt. Dies führt zu einer Wärmeabgabe an die Umgebung beziehungsweise zu einer Verminderung der zur Wärmeaufnahme genutzten Fläche und somit zu einer verringerten Effizienz der Wärmepumpe. Ein Verfahren und eine Einrichtung zum Steuern des Kältemitteldrucks in einer Klimaanlage sind in der Druckschrift WO 99/61135 A1 beschrieben. Weiter ist aus US2009/277196A1 eine Regelung zur Vermeidung der Vereisung durch die Regelung des Austrittstemperaturniveaus des Kältemittels aus dem Wärmepumpenverdampfer bekannt. Die Aufgabe der Erfindung besteht darin, eine Vorrichtung und ein Verfahren zur Vereisungsvermeidungsregelung bereitzustellen, bei denen die Wärmepumpenfunktion kontinuierlich und mit einer - im Vergleich zum Stand der Technik - verbesserten Effizienz auch bei Erreichen von Umgebungslufttemperaturen unter 0 °C aufrechterhalten wird.
Die Lösung der Aufgabe der Erfindung besteht zu einem Teil in einer Vorrichtung zur Vereisungsvermeidungsregelung für Wärmepumpenverdampfer in Klimaanlagen von Fahrzeugen, bestehend aus einem Teilabschnitt eines sowohl als Wärmepumpe als auch als Klimaanlage betreibbaren Kältekreislaufs, der eine Klimaanlagen-Betriebsrichtung und eine Wärmepumpen-Betriebsrichtung aufweist, dessen kältemittelseitige Strömungsrichtung gleich oder entgegengesetzt sein kann, umfassend
- den Wärmepumpenverdampfer, welcher im Klimaanlagen-Betrieb in Klimaanlagen-Betriebsrichtung als Klimaanlagen-Kondensator fungiert,
- ein bevorzugt extern regelbares Expansionsventil zum Öffnen und Schließen,
- einen elektrischen oder einen mechanischen Kältemittelverdichter,
- Kältemittelleitungen zwischen Expansionsventil und Wärmepumpenverdampfer sowie zwischen Wärmepumpenverdampfer und Kältemittelverdichter,
- einen Kühlerlüfter, der dem Wärmepumpenverdampfer zugeordnet ist, der Umgebungsluft mit einer einstellbaren Strömungsgeschwindigkeit vor dem und durch den Wärmepumpenverdampfer absaugt und somit eine dauerhafte Überströmung der Wärmepumpenverdampferoberfläche mit Umgebungsluft ermöglicht,
- einen ersten Temperatursensor in oder auf der Kältemittelleitung vor dem Wärmepumpenverdampfer, bezogen auf die Wärmepumpen-Betriebsrichtung, mit dem der Sättigungsdruck des Kältemittels vor dem Verdampfer ermittelt werden kann, sowie
- eine Steuerungs- und Regeleinheit, die über Signalleitungen zumindest verbunden ist mit
   ∘ dem ersten Temperatursensor,
   ∘ weiteren Sensoren, Messsignalgebern oder Rechnereinheiten mit berechneten Werten, insbesondere zur Erfassung der Umgebungslufttemperatur T_{U} und der Fahrzeuggeschwindigkeit v_{F},
   ∘ optional vorhandenen Sensoren, wie zum Beispiel einem Sensor zur Bestimmung der Umgebungsfeuchte, einem Regensensor, der Regen oder Schneefall erkennt, und anderen optionalen Sensoren,
   ∘ dem Expansionsventil,
   ∘ dem Kühlerlüfter und
   ∘ dem Kältemittelverdichter bei Anwendung eines elektrischen Kältemittelverdichters oder dem Regelventil eines mechanischen Kältemittelverdichters, und die programmtechnische Mittel aufweist
   ∘ zur Auswertung und Verarbeitung der Messsignale der mit der Steuerungs- und Regeleinheit über die Signalleitungen verbundenen Sensoren,
   ∘ zur direkten oder indirekten Regelung des Strömungsquerschnitts des Expansionsventils und der Drehzahl des elektrischen Kältemittelverdichters oder des Regelventils des mechanischen Kältemittelverdichters sowie
   ∘ für die Ansteuerung des Kühlerlüfters des Fahrzeugs im Wärmepumpenbetrieb.

Nach der Konzeption der Erfindung ermöglicht diese Vorrichtung eine Regelung des Oberflächentemperaturniveaus beziehungsweise der Kältemitteltemperatur im gesamten Wärmepumpenverdampfer auf ein vorgegebenes Temperaturniveau.

Gemäß einer Ausführungsform der Erfindung ist zur Regelung der Austrittstemperatur Tₒᵤₜ ein mit der Steuerungs- und Regeleinheit über eine weitere Signalleitung verbundener Drucksensor an einer beliebigen Position, mit oder ohne zwischengeschaltete Komponente, in der Kältemittelleitung stromabwärts vom Austritt des Wärmepumpenverdampfers auf dem Weg zum Kältemittelverdichter vorgesehen, bezogen auf die Wärmepumpen-Betriebsrichtung. Dazu ist vorzugsweise ein mit der Steuerungs- und Regeleinheit über eine weitere Signalleitung verbundener zweiter Temperatursensor in der Kältemittelleitung stromabwärts vom Austritt des Wärmepumpenverdampfers auf dem Weg zum Kältemittelverdichter vorgesehen, bezogen auf die Wärmepumpen-Betriebsrichtung.

Alternativ findet anstelle der beiden einzelnen Sensoren ein kombinierter Druck-Temperatursensor Anwendung, der ebenfalls mit der Steuerungs- und Regeleinheit über eine weitere Signalleitung verbunden und an einer beliebigen Position, mit oder ohne zwischengeschaltete Komponente, in der Kältemittelleitung stromabwärts vom Austritt des Wärmepumpenverdampfers auf dem Weg zum Kältemittelverdichter platziert ist, wiederum bezogen auf die Wärmepumpen-Betriebsrichtung.

In einer Ausgestaltung der erfindungsgemäßen Vorrichtung sind eventuelle Druckverluste, insbesondere durch Komponenten, die zwischen Wärmepumpenverdampferaustritt und der Sensorposition zur Bestimmung der Temperatur Tₒᵤₜ platziert sind, per Kennfeld in der Steuerungs- und Regeleinheit hinterlegt.

Des Weiteren kann in der Vorrichtung auch ein nicht aktiv, das heißt, nicht mit Kältemittel durchströmter, im Kältekreislauf eingebundener Wärmeübertrager, zum Beispiel ein Chiller, mit einem Sensor vorgesehen sein, wobei der Sensor zur Erzeugung eines Drucksignals ausgebildet ist, das bei der Regelung der Austrittstemperatur Tₒᵤₜ zur Messwerterfassung herangezogen werden kann.

In einer besonders vorteilhaften Ausführungsform der Erfindung ist in der Steuerungs- und Regeleinheit ein Druckverlustkennfeld für den Wärmepumpenverdampfer hinterlegt. Mit Hilfe der Umgebungslufttemperatur T_{U} und diesem Druckverlustkennfeld kann eine Abschätzung der maximal möglichen Verdichterdrehzahl bei Anwendung eines elektrischen Kältemittelverdichters oder des maximal möglichen Regelstroms des Regelventils bei Anwendung eines mechanischen Kältemittelverdichters vorgenommen werden. In diesem Fall könnte sogar auf die (kombinierte) Druck- und Temperatursensorik nach dem Wärmepumpenverdampfer verzichtet werden.

Die Aufgabe der Erfindung wird zu einem weiteren Teil gelöst durch ein Verfahren zur Vereisungsvermeidungsregelung für Wärmepumpenverdampfer in Klimaanlagen von Fahrzeugen, wobei ein Beheizen des Innenraums des Fahrzeugs mit Hilfe einer einen Wärmepumpenverdampfer aufweisenden Wärmepumpe, die als Quelle zur Verdampfung eines flüssigen Kältemittels Umgebungsluft nutzt, durchgeführt wird. Die Wärmepumpe weist neben dem Wärmepumpenverdampfer zumindest einen Kältemittelverdichter, einen Verflüssiger und ein Expansionsventil auf, das mit dem Wärmepumpenverdampfer verbunden ist. Diese Komponenten sind in der genannten Reihenfolge durch eine einen Kältekreislauf unterstützende Kältemittelleitung miteinander verbunden. Erfindungsgemäß erfolgt eine Regelung des Oberflächentemperaturniveaus des Wärmepumpenverdampfers und der Strömungsgeschwindigkeit der Umgebungsluft in Abhängigkeit von der Umgebungslufttemperatur vor dem Wärmepumpenverdampfer in folgenden Verfahrensschritten:
a) Erfassung der Umgebungslufttemperatur oder der Lufteintrittstemperatur in den Wärmepumpenverdampfer mittels eines UmgebungsTemperatursensors oder eines Temperatursensors im Luftstrom vor dem Wärmepumpenverdampfer;
b) Erfassung der Eintrittstemperatur des Kältemittels mittels eines ersten Temperatursensors, der in oder auf der Kältemittelleitung vor dem Wärmepumpenverdampfer angeordnet ist, bezogen auf die Strömungsrichtung des Kältemittels im Wärmepumpenbetrieb;
c) Übermittlung der erfassten Messsignale der Sensoren an eine Steuerungs- und Regeleinheit, welche die erfassten Messsignale auswertet;
d) Einstellung der Strömungsgeschwindigkeit der Umgebungsluft und des Temperaturniveaus der Verdampferoberfläche mittels der Stellglieder:
   Öffnungsquerschnitt des Expansionsventils, Kältemittelmassenstrom in der Kältemittelleitung und Drehzahl eines Kühlerlüfters, wobei
   i. der Strömungsquerschnitt des Expansionsventils durch die Steuerungs- und Regeleinheit direkt oder indirekt geregelt wird, indem der Öffnungsquerschnitt des Expansionsventils so weit geschlossen wird, dass die Kältemitteltemperatur Tᵢₙ am Eintritt in den Wärmepumpenverdampfer geringfügig mit einem Abstand ΔTᵢₙ zwischen 0 bis 5 K, bevorzugt 0 bis 2 K, unter der erfassten Umgebungslufttemperatur T_{U} und/oder der Lufteintrittstemperatur in den Wärmepumpenverdampfer liegt, und wobei
   ii. die Austrittstemperatur Tₒᵤₜ des Kältemittels aus dem Wärmepumpenverdampfer, welche maßgeblich durch den Druckverlust und somit durch den Massenstrom des Kältemittels bestimmt wird, geregelt wird, indem der Austrittsdruck aus dem Wärmepumpenverdampfer über die Verdichterdrehzahl des Kältemittelverdichters oder, bei Anwendung eines Regelventils für den Kältemittelverdichter, über den Regelstrom so eingestellt wird, dass die zum Austrittsdruck zugehörige Sättigungstemperatur des Kältemittels, die mittels von in der Steuerungs- und Regeleinheit hinterlegten Kennlinien, Polynomfunktionen oder durch den Zugriff auf Bibliotheken mit ausführlichen Stoffdatenfunktionen ermittelt wird, einen Abstand ΔTₘₐₓ zur Umgebungslufttemperatur von 2 K bis 10 K, bevorzugt 2 bis 5 K, aufweist.

Der Abstand ΔTₒᵤₜ zwischen Umgebungslufttemperatur T_{U} und der Austrittstemperatur Tₒᵤₜ errechnet sich aus der Summe von Abstand ΔTₘₐₓ zur Umgebungslufttemperatur T_{U} und der Überhitzung des Kältemittels. Bevorzugt wird mit weiter absinkender Umgebungstemperatur unter 0 °C die Temperaturdifferenz (Kältemitteltemperatur-Umgebungslufttemperatur) in Richtung Maximalwert 10 K, bevorzugt 5 K, verschoben.

Mit der erfindungsgemäßen Vorrichtung und mit dem erfindungsgemäßen Verfahren lassen sich die folgenden Vorteile erzielen:
- eine Minimierung des Vereisungsrisikos,
- die Vermeidung eines Leistungsverlustes der Wärmepumpe während des Abtauens,
- eine höhere erzielbare Leistungsaufnahme aus der Quelle Umgebungsluft und
- ein effizienter Betrieb eines (Zu-)Heizsystems, eine Reduzierung des Kraftstoffverbrauchs beziehungsweise eine Erhöhung der Reichweite von Elektrofahrzeugen.

Erfindungsgemäß wird das Expansionsventil, wie bereits erwähnt, dazu benutzt, die Eintrittstemperatur des Kältemittels in den Wärmepumpenverdampfer zu regeln. Dabei wird das Ventil so weit geschlossen, dass die Kältemitteltemperatur Tᵢₙ am Eintritt des Wärmepumpenverdampfers geringfügig unter der Umgebungslufttemperatur beziehungsweise unter der Lufteintrittstemperatur in den Wärmepumpenverdampfer liegt. Ist das Expansionsventil zu weit geöffnet, steigt die Eintrittstemperatur des Kältemittels aufgrund des Druckverlustes im Wärmepumpenverdampfer über die Umgebungslufttemperatur. In diesem Fall wird ein Teil der Wärmeübertragerfläche nicht zur Verdampfung, sondern gegebenenfalls sogar zur Kondensation des Kältemittels genutzt. Anstatt Wärme aufzunehmen, wird Wärme abgegeben. Die Effizienz der Luftwärmepumpe wird hierdurch negativ beeinflusst. Vorzugsweise wird das Ventil so weit geschlossen, dass die Kältemitteltemperatur Tᵢₙ am Eintritt des Wärmepumpenverdampfers mit einem Abstand von ΔTᵢₙ = 1 K unter der Umgebungslufttemperatur T_{U} und/oder der Lufteintrittstemperatur in den Wärmepumpenverdampfer liegt.

Nach einer bevorzugten Ausführungsform des erfindungsgemäßen Verfahrens wird die Austrittstemperatur Tₒᵤₜ des Kältemittels geregelt, indem ein Druckverlustkennfeld für den Wärmepumpenverdampfer der Wärmepumpe in der Steuerungs- und Regeleinheit hinterlegt wird und mit Hilfe der Umgebungslufttemperatur eine maximal mögliche Verdichterdrehzahl des Kältemittelverdichters oder, bei Anwendung eines Regelventils für den Kältemittelverdichter, der maximal mögliche Regelstrom abgeschätzt wird.

Im Gegensatz zum reinen AC-Betrieb wird der Kühlerlüfter des Fahrzeugs auch bei Temperaturen unter 0 °C Umgebungslufttemperatur von der Klimaanlage/Wärmepumpe, bevorzugt in Abhängigkeit der Fahrgeschwindigkeit v_{F} und/oder von einem Regen- und/oder Feuchtesensorsignal, angefordert.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- **Fig. 1:**: einen Kältekreislauf einer Wärmepumpe nach dem Stand der Technik;
- **Fig. 2:**: ein Diagramm mit dem Temperaturverlauf des Kältemittels über die Strömungslänge vom Eintritt bis zum Austritt eines Wärmepumpenverdampfers im Vergleich zur Umgebungslufttemperatur T_{U} aufgrund von Druckverlusten, Stand der Technik;
- **Fig. 3a:**: ein Diagramm mit dem Temperaturverlauf des Kältemittels über die Strömungslänge vom Eintritt bis zum Austritt des Wärmepumpenverdampfers mit Kältemitteltemperaturen unterhalb der Umgebungslufttemperatur T_{U};
- **Fig. 3b:**: ein Diagramm mit dem Temperaturverlauf des Kältemittels über die Strömungslänge vom Eintritt bis zum Austritt des Wärmepumpenverdampfers im Vergleich zur Umgebungslufttemperatur T_{U} bei Regelung der Temperatur;
- **Fig. 4:**: einen Kältekreislaufteilabschnitt mit Sensorik und Aktorik für die Luft-Wärmepumpe mit Druck- und Temperatursensorik vor und nach dem Wärmepumpenverdampfer; und
- **Fig. 5:**: einen Kältekreislaufteilabschnitt mit Sensorik und Aktorik für die Luft-Wärmepumpe ohne Druck- und Temperatursensorik nach dem Wärmepumpenverdampfer.

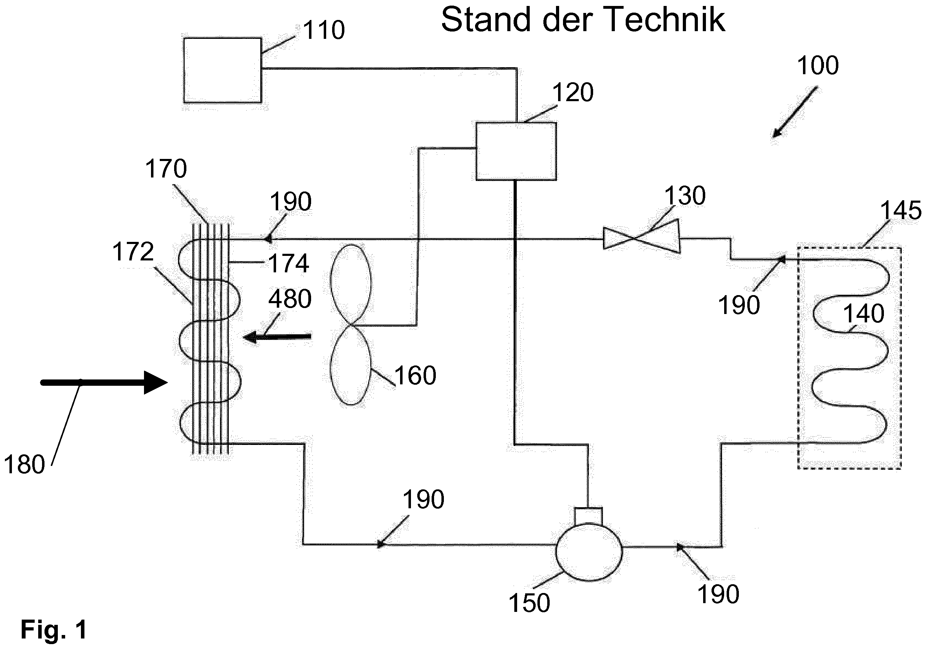

Eine in **Fig. 1** dargestellte Wärmepumpe 100 nach dem Stand der Technik aus der WO 2009/094691 A1 umfasst einen Kältekreislauf mit einem Wärmepumpenverdampfer 170, einem Verdichter 150, einem Verflüssiger 140 sowie einem Expansionsventil 130, das sich zwischen dem Austritt des Verflüssigers 140 und dem Eintritt des Wärmepumpenverdampfers 170 befindet. Die Verbindungen zwischen dem Wärmepumpenverdampfer 170, dem Verdichter 150, dem Verflüssiger 140, dem Expansionsventil 130 und wiederum dem Wärmepumpenverdampfer 170 sind durch Kältemittelleitungen 190 für den Kältemittelfluss vorgesehen. Die Kältemittelflüssigkeit nimmt im Wärmepumpenverdampfer 170 die Wärme aus der Umgebungsluft 180 auf und verdampft zu Kältemitteldampf. Der Verdichter 150 verdichtet den Kältemitteldampf mit mechanischer Energie und erhöht dadurch seine Temperatur. Im Verflüssiger 140 übergibt der Kältemitteldampf seine Wärme dem Heizkreis 145, der Kältemitteldampf kondensiert und wird wieder zu Kältemittelflüssigkeit. Im Expansionsventil 130 wird der Druck der Kältemittelflüssigkeit durch Öffnen des Expansionsventils 130 abgebaut und die Kältemittelflüssigkeit gerät wieder in den Wärmepumpenverdampfer 170, in dem durch Aufnahme aus der Wärme der Umgebungsluft 180 wieder Kältemitteldampf entsteht und so die Kreislauffunktion wieder durchlaufen wird. Dem Wärmepumpenverdampfer 170 ist ein Lüfter 160 zugeordnet, der mit einer Steuereinheit 120 in Verbindung steht, die selbst mit dem Verdichter 150 und einem Temperatursensor 110 in signaltechnischer Verbindung steht. Die Wärmepumpe 100 weist einen regelmäßig oder vorübergehend von der Steuereinheit 120 unterbrechbaren Kältemittelfluss durch den Wärmepumpenverdampfer 170 auf. Bei normalem Betrieb saugt der Lüfter 160 Umgebungsluft 180 über eine Seite 172 des Wärmepumpenverdampfers 170 an, wodurch die Umgebungsluft 180 über die Wärmepumpenverdampferoberfläche geleitet wird und durch Aufnahme von Wärme aus der Umgebungsluft 180 Kältemitteldampf erzeugt wird. Im Fall einer Vereisung des Wärmepumpenverdampfers 170, wobei die sehr niedrigen Temperaturen im Vereisungsbereich von dem Temperatursensor 110 angezeigt werden, wird der Kältemittelfluss im Verdichter 150 durch die Steuereinheit 120 gestoppt. Durch die Steuereinheit 120 wird danach die Luftrichtung des Lüfters 160 umgekehrt, das heißt, mit dem Lüfter 160 wird die Richtung 480 des Luftstroms von der Seite 174 aus auf die Verdampferoberfläche gelenkt, so dass wärmere Luft auf die Verdampferoberfläche geleitet und der Wärmepumpenverdampfer 170 enteist.

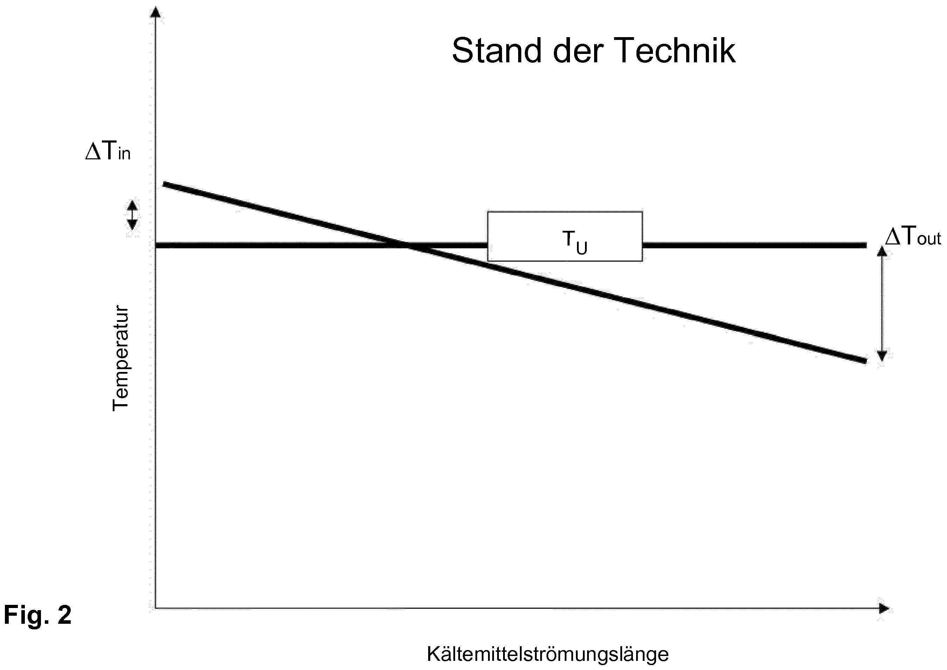

In **Fig. 2** werden die Nachteile des Standes der Technik anhand eines Diagramms verdeutlicht. Das Diagramm beschreibt den Temperaturverlauf des Kältemittels über die Strömungslänge vom Eintritt bis zum Austritt eines Wärmepumpenverdampfers im Vergleich zur Umgebungslufttemperatur T_{U} aufgrund von Druckverlusten mit einer Eintrittstemperatur Tᵢₙ und einer Austrittstemperatur Tₒᵤₜ. Die Regelung des Austrittstemperaturniveaus kann, vor allem bei den Kältemitteln R134a und R1234yf, dazu führen, dass aufgrund der Druckverluste im Wärmepumpenverdampfer am Eintritt des Wärmepumpenverdampfers sich eine Kältemitteltemperatur Tᵢₙ mit einer Temperaturdifferenz ΔTᵢₙ über der Umgebungslufttemperatur T_{U} einstellt, wie in der **Fig. 2** gezeigt. Dies führt zu einer Wärmeabgabe an die Umgebung beziehungsweise zu einer Verminderung der zur Wärmeaufnahme genutzten Fläche und somit zu einer verringerten Effizienz der Wärmepumpe.

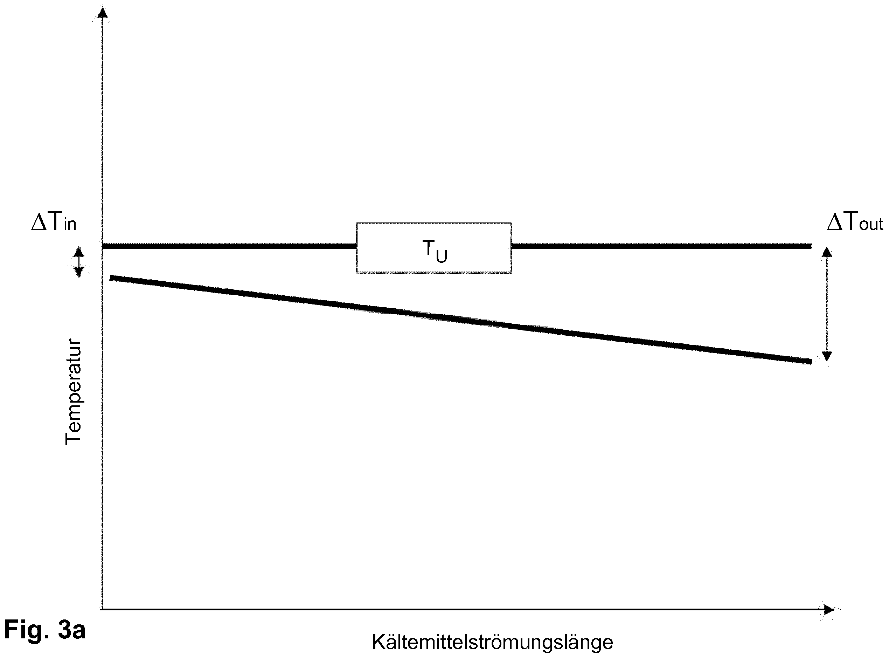

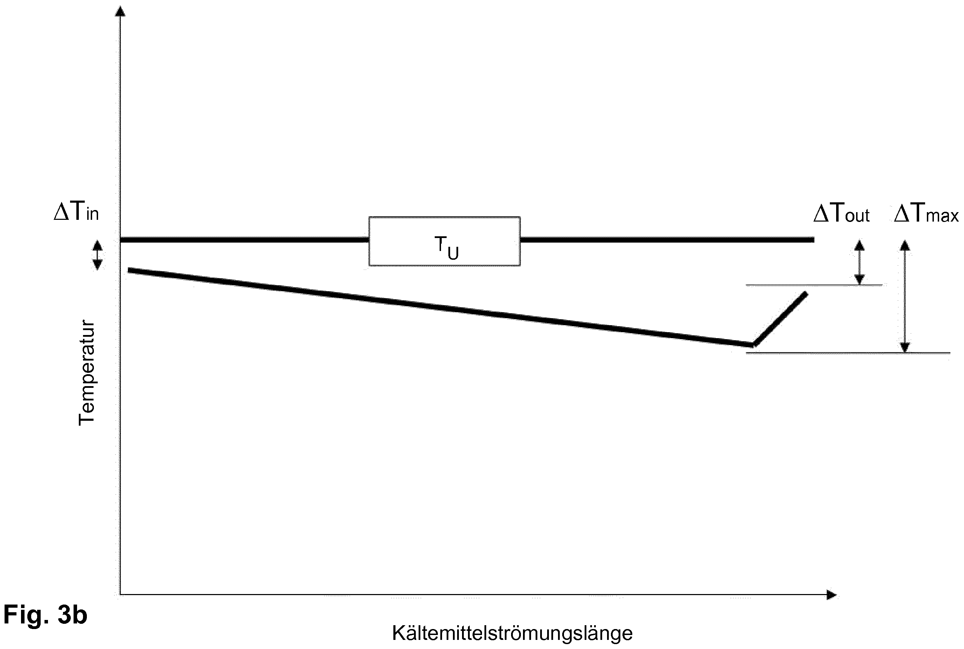

Erfindungsgemäß erfolgt eine Regelung des Oberflächentemperaturniveaus beziehungsweise der Kältemitteltemperatur im gesamten Wärmepumpenverdampfer auf ein vorgegebenes Temperaturniveau. Das Diagramm aus **Fig. 3a** zeigt einen vereinfacht dargestellten, linear abnehmenden Temperaturverlauf des Kältemittels über die Kältemittelströmungslänge vom Eintritt bis zum Austritt des Wärmepumpenverdampfers mit Kältemitteltemperaturen unterhalb der Umgebungslufttemperatur T_{U} mit einer Temperaturdifferenz ΔTᵢₙ am Eintritt und einem Abstand ΔTₒᵤₜ am Austritt. Diese Temperaturänderung wird durch den kältemittelseitigen Druckverlust im 2-Phasen-Gebiet verursacht. Das Diagramm aus **Fig. 3b** zeigt einen Temperaturverlauf des Kältemittels bei Regelung der Temperatur mit wechselndem Anstieg über die Kältemittelströmungslänge vom Eintritt bis zum Austritt des Wärmepumpenverdampfers im Vergleich zur Umgebungslufttemperatur T_{U}. Das Kältemittel wird in diesem Beispiel vollständig verdampft und im Bereich des Temperaturanstiegs überhitzt.

Die Kältemitteltemperatur Tᵢₙ am Eintritt des Wärmepumpenverdampfers liegt, wie die **Figuren 3a** und **3b** zeigen, geringfügig mit einer Temperaturdifferenz ΔTᵢₙ von zum Beispiel 1 K unter der Umgebungslufttemperatur T_{U} beziehungsweise unter der Lufteintrittstemperatur in den Wärmepumpenverdampfer. Die Austrittstemperatur Tₒᵤₜ des Kältemittels wird maßgeblich durch den Druckverlust und somit den Massenstrom des Kältemittels bestimmt. Hierzu wird die Verdichterdrehzahl eines elektrischen Kältemittelverdichters oder das Regelventil eines mechanischen Kältemittelverdichters so geregelt, dass die zum Austrittsdruck zugehörige Sättigungstemperatur des Kältemittels einen gewissen Abstand ΔTₘₐₓ zur Umgebungslufttemperatur T_{U}, nämlich einen Abstand zwischen 2 bis 10 K, bevorzugt 2 bis 5 K, aufweist, wie die **Fig. 3b** zeigt. Im Falle eines Temperaturverlaufs, wie er in der **Fig. 3b** gezeigt ist, errechnet sich der Abstand ΔTₒᵤₜ zwischen der Austrittstemperatur Tₒᵤₜ und der Umgebungslufttemperatur T_{U} aus der Summe von Abstand ΔTₘₐₓ und der Überhitzung des Kältemittels.

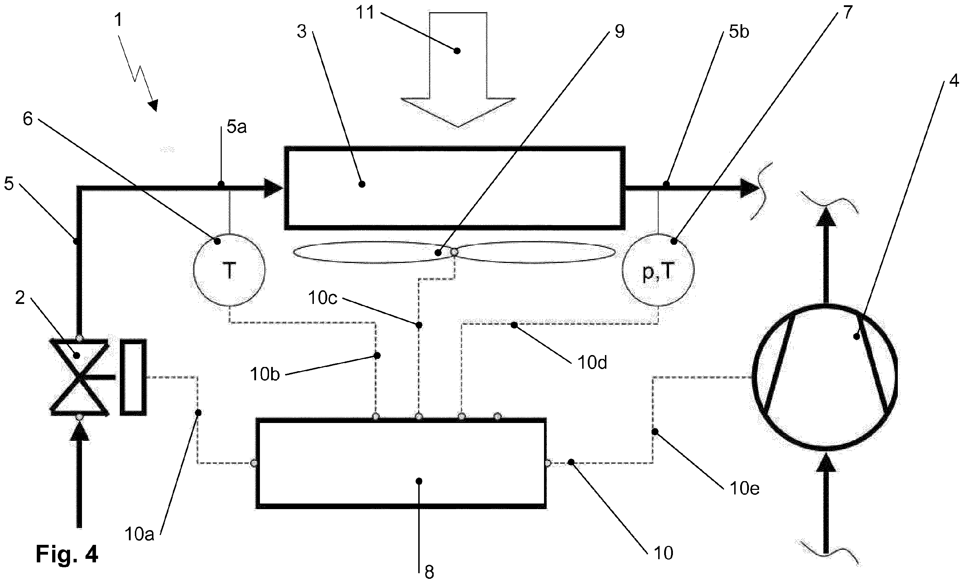

Die **Fig. 4** zeigt einen Teilabschnitt 1 eines Kältekreislaufs einer Klimaanlage als Vorrichtung 1 zur Vereisungsvermeidungsregelung für einen Wärmepumpenverdampfer. Die Vorrichtung 1 umfasst ein bevorzugt extern regelbares Expansionsventil 2 mit einem Klimaanlagen-Kondensator 3 (AC-Kondensator), der im Wärmepumpenbetrieb als Wärmepumpenverdampfer 3 funktioniert und im Wärmepumpenbetrieb bevorzugt entgegen der Klimaanlagen-Betriebsrichtung (AC-Betriebsrichtung) kältemittelseitig durchströmt wird, einen Kältemittelverdichter 4 sowie Kältemittelleitungen 5 zwischen Expansionsventil 2 und Wärmepumpenverdampfer 3 sowie zwischen Wärmepumpenverdampfer 3 und Kältemittelverdichter 4. Gemäß **Fig. 4** sind ein erster Temperatursensor 6 in oder auf einem Abschnitt 5a der Kältemittelleitung 5 vor dem Wärmepumpenverdampfer 3 sowie ein kombinierter Druck-Temperatursensor 7 in einem Abschnitt 5b der Kältemittelleitung 5 nach dem Wärmepumpenverdampfer 3 angeordnet, jeweils bezogen auf die Wärmepumpen-Betriebsrichtung. Die Messsignale von den Sensoren, dem ersten Temperatursensor 6 und dem kombinierten Druck-Temperatursensor 7, werden von einer Steuerungs- und Regeleinheit 8 verarbeitet, die neben der Verarbeitung weiterer Sensorik, die im Fahrzeug vorhanden ist, zum Beispiel der Umgebungslufttemperatur T_{U}, der Fahrzeuggeschwindigkeit v_{F} usw., für die Wärmepumpe den in **Fig. 4** gezeigten Kühlerlüfter 9 des Fahrzeugs ansteuert und direkt oder indirekt den Strömungsquerschnitt des Expansionsventils 2 sowie die Drehzahl eines elektrischen Kältemittelverdichters 4 oder das Regelventil eines mechanischen Kältemittelverdichters 4 regelt. Optional können noch weitere Sensoren zur Bestimmung des Taupunkts oder des Zustandes der Umgebungsluft, wie zum Beispiel ein Regensensor oder ein Umgebungsfeuchtesensor, genutzt werden. Dazu ist die Steuerungs- und Regeleinheit 8 über mindestens eine Signalleitung 10, 10a mit dem externen Regler des Expansionsventils 2, über mindestens eine Signalleitung 10, 10b mit dem ersten Temperatursensor 6, über mindestens eine Signalleitung 10, 10c mit dem Kühlerlüfter 9, über mindestens eine Signalleitung 10, 10d mit dem kombinierten Druck-Temperatursensor 7 sowie über mindestens eine Signalleitung 10, 10e mit dem Kältemittelverdichter 4 beziehungsweise einem Regler für den Kältemittelverdichter 4 verbunden.

Der Kühlerlüfter 9, der dem Wärmepumpenverdampfer 3 zugeordnet ist, saugt Umgebungsluft 11 mit einer einstellbaren Strömungsgeschwindigkeit vor dem und durch den Wärmepumpenverdampfer 3 ab und ermöglicht somit eine dauerhafte Überströmung der Wärmepumpenverdampferoberfläche mit Umgebungsluft 11. Im Gegensatz zum reinen Klimaanlagen-Betrieb (AC-Betrieb) wird der Kühlerlüfter 9 auch bei Temperaturen unter 0 °C Umgebungslufttemperatur T_{U} von der Klimaanlage (Wärmepumpe), bevorzugt in Abhängigkeit von der Fahrgeschwindigkeit v_{F}, angefordert.
Das Expansionsventil 2 wird dazu benutzt, die Eintrittstemperatur Tᵢₙ in den Wärmepumpenverdampfer 3 zu regeln. Dabei wird das Expansionsventil 2 so weit geschlossen, dass die Kältemitteltemperatur Tᵢₙ am Eintritt des Wärmepumpenverdampfers 3 geringfügig, zum Beispiel 1 K, unter der Umgebungslufttemperatur T_{U} beziehungsweise der Lufteintrittstemperatur in den Wärmepumpenverdampfer 3 liegt. Ist das Expansionsventil 2 zu weit geöffnet, steigt die Eintrittstemperatur Tᵢₙ aufgrund des Druckverlustes im Wärmepumpenverdampfer 3 über die Umgebungslufttemperatur T_{U}. In diesem Fall wird ein Teil der Wärmeübertragerfläche nicht zur Verdampfung, sondern gegebenenfalls sogar zur Kondensation des Kältemittels genutzt. Anstatt Wärme aufzunehmen, wird Wärme abgegeben. Die Effizienz der Luftwärmepumpe wird hierdurch negativ beeinflusst.

Die Austrittstemperatur des Kältemittels wird maßgeblich durch den Druckverlust und somit den Massenstrom des Kältemittels bestimmt. Hierzu wird die Verdichterdrehzahl eines elektrischen Kältemittelverdichters 4 so geregelt beziehungsweise der Regelstrom eines Reglers für einen mechanischen Kältemittelverdichter 4 so eingestellt, dass die zum Austrittsdruck zugehörige Sättigungstemperatur des Kältemittels unterhalb der Umgebungslufttemperatur T_{U} liegt und dabei einen gewissen Abstand zu dieser Umgebungslufttemperatur T_{U} (bevorzugt 5 bis 10 K) einhält. Die Sättigungstemperatur des Kältemittels wird dabei gemäß **Fig. 4** aus dem mit dem kombinierten Druck-Temperatursensor 7 erfassten Drucksignal p mittels der in der Steuerungs- und Regeleinheit 8 hinterlegten Kennlinien, Polynomfunktionen oder durch den Zugriff auf Bibliotheken mit ausführlichen Stoffdatenfunktionen bestimmt.

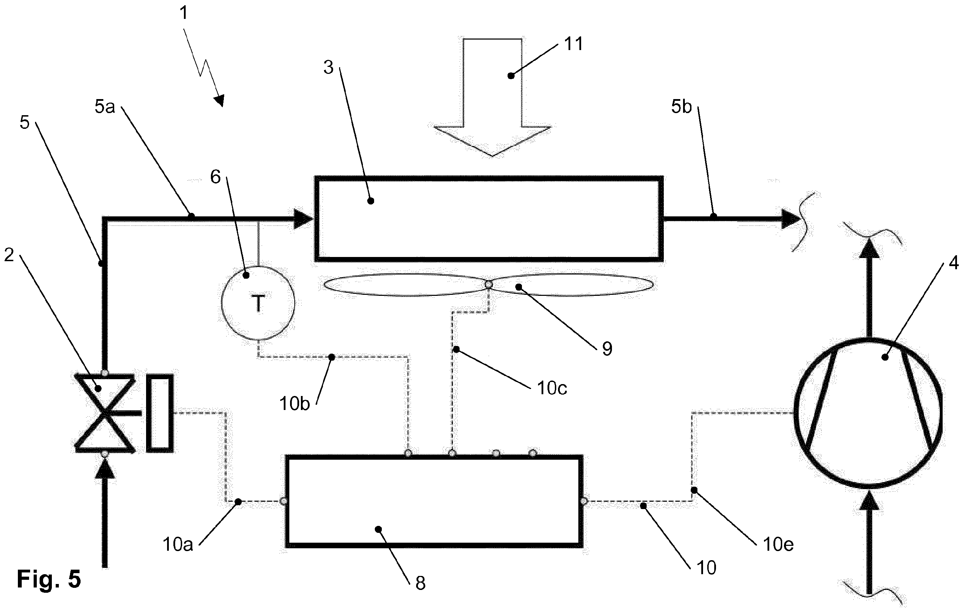

Es bietet sich weiterhin die Möglichkeit, ein Druckverlustkennfeld für den Wärmepumpenverdampfer 3 zu hinterlegen und mit Hilfe der Umgebungslufttemperatur T_{U} eine Abschätzung der maximal möglichen Verdichterdrehzahl oder des maximal möglichen Regelstroms vorzunehmen, unter der/dem die zum Austrittsdruck zugehörige Sättigungstemperatur des Kältemittels unterhalb der Umgebungslufttemperatur T_{U} liegt und dabei einen bestimmten Abstand ΔTₘₐₓ zu dieser Umgebungslufttemperatur T_{U}, nämlich von bevorzugt 5 bis 10 K, einhält. In diesem Fall kann sogar auf die eventuell kombinierte Druck- und Temperatursensorik nach dem Wärmepumpenverdampfer 3 verzichtet werden, wie es die Vorrichtung 1 in **Fig. 5** zeigt. So fehlen in der Vorrichtung 1 zur Vereisungsvermeidungsregelung für einen Wärmepumpenverdampfer 3 gemäß der Darstellung in **Fig. 5****,** im Unterschied zur **Fig. 4****,** ein Druck-Temperatursensors 7 nach dem Wärmepumpenverdampfer 3, bezogen auf die Wärmepumpen-Betriebsrichtung, und eine entsprechende Signalleitung 10d vom Druck-Temperatursensors 7 zur Steuerungs- und Regeleinheit 8.

### LISTE DER BEZUGSZEICHEN

- 1: Vorrichtung, Teilabschnitt eines Kältekreislaufs einer Klimaanlage
- 2: Expansionsventil
- 3: Wärmepumpenverdampfer, Klimaanlagen-Kondensator (AC-Kondensator)
- 4: Kältemittelverdichter
- 5: Kältemittelleitung
- 5a: Abschnitt der Kältemittelleitung (vor dem Wärmepumpenverdampfer 3)
- 5b: Abschnitt der Kältemittelleitung (nach dem Wärmepumpenverdampfer 3)
- 6: (erster) Temperatursensor
- 7: (kombinierter) Druck-Temperatursensor
- 8: Steuerungs- und Regeleinheit
- 9: Kühlerlüfter
- 10: Signalleitungen
- 10a: Signalleitung (zwischen Steuerungs- und Regeleinheit 8 und Expansionsventil 2)
- 10b: Signalleitung (zwischen Steuerungs- und Regeleinheit 8 und (erstem) Temperatursensor 6)
- 10c: Signalleitung (zwischen Steuerungs- und Regeleinheit 8 und Kühlerlüfter 9)
- 10d: Signalleitung (zwischen Steuerungs- und Regeleinheit 8 und Druck-Temperatursensor 7)
- 10e: Signalleitung (zwischen Steuerungs- und Regeleinheit 8 und Kältemittelverdichter 4)
- 11: Umgebungsluft
- T_{U}: Umgebungslufttemperatur
- Tᵢₙ: Eintrittstemperatur (des Kältemittels in den Wärmepumpenverdampfer 3), Kältemitteltemperatur am Eintritt in den Wärmepumpenverdampfer 3
- Tₒᵤₜ: Austrittstemperatur (des Kältemittels aus dem Wärmepumpenverdampfer 3)
- ΔTᵢₙ: Abstand/Differenz der Eintrittstemperatur des Kältemittels in den Wärmepumpenverdampfer zur Umgebungslufttemperatur T_{U}
- ΔTₒᵤₜ: Abstand/Differenz der Austrittstemperatur des Kältemittels zur Umgebung
- ΔTₘₐₓ: Abstand/Differenz der zum Kältemitteldruck am Austritt des Wärmepumpenverdampfers zugehörigen Sättigungstemperatur des Kältemittels zur Umgebung
- v_{F}: Fahrgeschwindigkeit, Fahrzeuggeschwindigkeit
- p: Druck, Drucksignal
- 100: Wärmepumpe (Stand der Technik)
- 110: Temperatursensor (in Wärmepumpe 100 nach dem Stand der Technik)
- 120: Steuereinheit (in Wärmepumpe 100 nach dem Stand der Technik)
- 130: Expansionsventil (in Wärmepumpe 100 nach dem Stand der Technik)
- 140: Verflüssiger (in Wärmepumpe 100 nach dem Stand der Technik)
- 145: Heizkreis (in Wärmepumpe 100 nach dem Stand der Technik)
- 150: Verdichter (in Wärmepumpe 100 nach dem Stand der Technik)
- 160: Lüfter (in Wärmepumpe 100 nach dem Stand der Technik)
- 170: Verdampfer (in Wärmepumpe 100 nach dem Stand der Technik)
- 172: Seite des Verdampfers 170 (in Wärmepumpe 100 nach dem Stand der Technik)
- 174: Seite des Verdampfers 170 (in Wärmepumpe 100 nach dem Stand der Technik)
- 180: Umgebungsluft
- 190: Kältemittelleitungen (in Wärmepumpe 100 nach dem Stand der Technik)
- 480: Richtung des Luftstroms (in Wärmepumpe 100 nach dem Stand der Technik)

## Patentansprüche

1. Vorrichtung (1) zur Regelung eines Oberflächentemperaturniveaus und zur Vereisungsvermeidung eines Wärmepumpenverdampfers (3) für Klimaanlagen von Fahrzeugen, bestehend aus einem Teilabschnitt (1) eines sowohl als Wärmepumpe als auch als Klimaanlage betreibbaren Kältekreislaufs, umfassend
• den Wärmepumpenverdampfer (3), welcher im Klimaanlagen-Betrieb in Klimaanlagen-Betriebsrichtung als Klimaanlagen-Kondensator (3) fungiert,
• ein regelbares Expansionsventil (2) zum Öffnen und Schließen,
• einen Kältemittelverdichter (4),
• Kältemittelleitungen (5) zwischen Expansionsventil (2) und Wärmepumpenverdampfer (3) sowie zwischen Wärmepumpenverdampfer (3) und Kältemittelverdichter (4),
• einen Kühlerlüfter (9), der dem Wärmepumpenverdampfer (3) zugeordnet ist, der Umgebungsluft (11) mit einer einstellbaren Strömungsgeschwindigkeit vor dem und durch den Wärmepumpenverdampfer (3) absaugt und somit eine dauerhafte Überströmung der Wärmepumpenverdampferoberfläche mit Umgebungsluft (11) ermöglicht,
• einen ersten Temperatursensor (6) zur Erfassung der Temperatur des Kältemittels sowie
• eine Steuerungs- und Regeleinheit (8), die über Signalleitungen (10, 10a, 10b, 10c, 10e) zumindest verbunden ist mit
• dem ersten Temperatursensor (6),
• weiteren Sensoren, Messsignalgebern oder Rechnereinheiten mit berechneten Werten, welche zur Erfassung der Umgebungslufttemperatur (T_{U}) und der Fahrzeuggeschwindigkeit (v_{F}) ausgebildet sind,
• dem Expansionsventil (2),
• dem Kühlerlüfter (9) und
• dem Kältemittelverdichter (4),
und die programmtechnische Mittel aufweist
• zur Auswertung und Verarbeitung der Messsignale der mit der Steuerungs- und Regeleinheit (8) über Signalleitungen (10, 10a) verbundenen Sensoren (6, 7),
• zur Regelung des Strömungsquerschnitts des Expansionsventils (2) und des Kältemittelverdichters (4) sowie
• für die Ansteuerung des Kühlerlüfters (9) des Fahrzeugs im Wärmepumpenbetrieb,
**dadurch gekennzeichnet, dass**
• der erste Temperatursensor (6) in Wärmepumpen-Betriebsrichtung vor dem Wärmepumpenverdampfer (3) angeordnet ist und
• zur Regelung der Austrittstemperatur (Tₒᵤₜ) des Kältemittels aus dem Wärmepumpenverdampfer (3) ein mit der Steuerungs- und Regeleinheit (8) über eine Signalleitung (10, 10d) verbundener Drucksensor oder kombinierter Druck-Temperatursensor (7) in der Kältemittelleitung (5, 5b) in Wärmepumpen-Betriebsrichtung stromabwärts vom Austritt des Wärmepumpenverdampfers (3) auf dem Weg zum Kältemittelverdichter (4) vorgesehen ist.

2. Vorrichtung nach Anspruch 1, **dadurch gekennzeichnet, dass** als weiterer Sensor/weitere Sensoren ein Sensor zur Bestimmung der Umgebungsfeuchte und/oder ein Regensensor, der Regen oder Schneefall erkennt, vorhanden ist/sind.

3. Vorrichtung nach Anspruch 1 oder 2, **dadurch gekennzeichnet, dass** im Falle des Vorsehens eines Drucksensors zur Regelung der Austrittstemperatur (Tₒᵤₜ) des Kältemittels aus dem Wärmepumpenverdampfer (3) ein mit der Steuerungs- und Regeleinheit (8) über eine weitere Signalleitung (10, 10d) verbundener zweiter Temperatursensor in der Kältemittelleitung (5, 5b) in Wärmepumpen-Betriebsrichtung stromabwärts vom Austritt des Wärmepumpenverdampfers (3) auf dem Weg zum Kältemittelverdichter (4) vorgesehen ist.

4. Vorrichtung nach einem der Ansprüche 1 bis 3, **dadurch gekennzeichnet, dass** eventuelle Druckverluste, insbesondere durch Komponenten, die zwischen dem Austritt des Wärmepumpenverdampfers (3) und der Sensorposition zur Bestimmung der Austrittstemperatur (Tₒᵤₜ) des Kältemittels aus dem Wärmepumpenverdampfer (3) platziert sind, per Kennfeld in der Steuerungs- und Regeleinheit (8) hinterlegt sind.

5. Vorrichtung nach einem der Ansprüche 1 bis 4, **dadurch gekennzeichnet, dass** ein nicht mit Kältemittel durchströmter Wärmeübertrager, mit einem Sensor vorgesehen ist, wobei der Sensor zur Erzeugung eines Drucksignals ausgebildet ist, das bei der Regelung der Austrittstemperatur (Tₒᵤₜ) des Kältemittels aus dem Wärmepumpenverdampfer (3) zur Messwerterfassung herangezogen werden kann.

6. Vorrichtung nach einem der Ansprüche 1 bis 5, **dadurch gekennzeichnet, dass** der Kältemittelverdichter (4) als elektrischer oder mechanischer Verdichter ausgebildet ist, wobei die Steuerungs- und Regeleinheit (8) bei Anwendung des elektrischen Kältemittelverdichters (4) über Signalleitungen (10, 10a, 10b, 10c, 10e) mit dem Kältemittelverdichter (4) und bei Anwendung des mechanischen Kältemittelverdichters (4) über Signalleitungen (10, 10a, 10b, 10c, 10e) mit einem Regelventil des Kältemittelverdichters (4) verbunden ist.

7. Vorrichtung nach Anspruch 6, **dadurch gekennzeichnet, dass** die Steuerungs- und Regeleinheit (8) programmtechnische Mittel
- bei Anwendung des elektrischen Kältemittelverdichters (4) zur Regelung der Drehzahl des elektrischen Kältemittelverdichters (4) oder
- bei Anwendung des mechanischen Kältemittelverdichters (4) zur Regelung des Regelventils des mechanischen Kältemittelverdichters (4) aufweist.

8. Vorrichtung nach Anspruch 6 oder 7, **dadurch gekennzeichnet, dass** in der Steuerungs- und Regeleinheit (8) ein Druckverlustkennfeld für den Wärmepumpenverdampfer (3) hinterlegt ist und mit Hilfe der Umgebungslufttemperatur (T_{U}) eine Abschätzung der maximal möglichen Verdichterdrehzahl bei Anwendung des elektrischen Kältemittelverdichters (4) oder des maximal möglichen Regelstroms des Regelventils bei Anwendung des mechanischen Kältemittelverdichters (4) vorgenommen werden kann.

9. Verfahren zur Regelung eines Oberflächentemperaturniveaus und zur Vereisungsvermeidung eines Wärmepumpenverdampfers (3) für Klimaanlagen von Fahrzeugen, wobei ein Beheizen eines Innenraums des Fahrzeugs mit Hilfe einer einen Wärmepumpenverdampfer (3) aufweisenden Wärmepumpe, die als Quelle zur Verdampfung eines flüssigen Kältemittels Umgebungsluft (11) nutzt, durchgeführt wird und die Wärmepumpe neben dem Wärmepumpenverdampfer (3) zumindest einen Kältemittelverdichter (4), einen Verflüssiger und ein Expansionsventil (2), das mit dem Wärmepumpenverdampfer (3) verbunden ist, aufweist, die in der genannten Reihenfolge durch eine einen Kältekreislauf unterstützende Kältemittelleitung (5) miteinander verbunden sind, **dadurch gekennzeichnet, dass** die Regelung des Oberflächentemperaturniveaus des Wärmepumpenverdampfers (3) und einer Strömungsgeschwindigkeit der Umgebungsluft (11) in Abhängigkeit von der Umgebungslufttemperatur (T_{U}) vor dem Wärmepumpenverdampfer (3) in folgenden Verfahrensschritten erfolgt:
a) Erfassung der Umgebungslufttemperatur (T_{U}) oder der Lufteintrittstemperatur in den Wärmepumpenverdampfer (3) mittels eines Umgebungstemperatursensors oder eines Temperatursensors im Luftstrom vor dem Wärmepumpenverdampfer (3),
b) Erfassung der Eintrittstemperatur des Kältemittels mittels eines ersten Temperatursensors (6), der vor dem Wärmepumpenverdampfer (3) angeordnet ist, bezogen auf die Strömungsrichtung des Kältemittels im Wärmepumpenbetrieb,
c) Übermittlung der erfassten Messsignale der Sensoren (6, 7) an eine Steuerungs- und Regeleinheit (8), welche die erfassten Messsignale auswertet,
d) Einstellung der Strömungsgeschwindigkeit der Umgebungsluft (11) und des Temperaturniveaus der Verdampferoberfläche mittels der Stellglieder: Öffnungsquerschnitt des Expansionsventils (2), Kältemittelmassenstrom in der Kältemittelleitung (5) und Drehzahl eines Kühlerlüfters (9), wobei
i. der Strömungsquerschnitt des Expansionsventils (2) durch die Steuerungs- und Regeleinheit (8) geregelt wird, indem der Öffnungsquerschnitt des Expansionsventils (2) so weit geschlossen wird, dass die Kältemitteltemperatur (Tᵢₙ) am Eintritt in den Wärmepumpenverdampfer (3) mit einem Abstand (ΔTᵢₙ) zwischen 0 bis 5 K unter der erfassten Umgebungslufttemperatur (T_{U}) oder der Lufteintrittstemperatur in den Wärmepumpenverdampfer (3) liegt, und wobei
ii. die Austrittstemperatur (Tₒᵤₜ) des Kältemittels aus dem Wärmepumpenverdampfer (3) geregelt wird, indem der Austrittsdruck aus dem Wärmepumpenverdampfer (3) über den Kältemittelverdichter (4) so eingestellt wird, dass die zum Austrittsdruck zugehörige Sättigungstemperatur des Kältemittels, die mittels von in der Steuerungs- und Regeleinheit (8) hinterlegten Kennlinien, Polynomfunktionen oder durch den Zugriff auf Bibliotheken mit ausführlichen Stoffdatenfunktionen ermittelt wird, einen Abstand (ΔTₘₐₓ) zur Umgebungslufttemperatur (T_{U}) von 2 K bis 10 K aufweist.

10. Verfahren nach Anspruch 9, **dadurch gekennzeichnet, dass** das Expansionsventil (2) so weit geschlossen wird, dass die Kältemitteltemperatur (Tᵢₙ) am Eintritt des Wärmepumpenverdampfers (3) mit einem Abstand ΔTᵢₙ im Bereich zwischen 0 bis 2 K, bevorzugt von ΔTᵢₙ = 1 K, unter der Umgebungslufttemperatur (T_{U}) oder der Lufteintrittstemperatur in den Wärmepumpenverdampfer (3) liegt.

11. Verfahren nach Anspruch 9 oder 10, **dadurch gekennzeichnet, dass** die zum Austrittsdruck zugehörige Sättigungstemperatur des Kältemittels, die mittels von in der Steuerungs- und Regeleinheit (8) hinterlegten Kennlinien, Polynomfunktionen oder durch den Zugriff auf Bibliotheken mit ausführlichen Stoffdatenfunktionen ermittelt wird, einen Abstand (ΔTₘₐₓ) zur Umgebungslufttemperatur (T_{U}) von 2 bis 5 K aufweist.

12. Verfahren nach einem der Ansprüche 9 bis 11, **dadurch gekennzeichnet, dass** der Austrittsdruck aus dem Wärmepumpenverdampfer (3) bei Anwendung eines elektrischen Kältemittelverdichters (4) über die Verdichterdrehzahl des Kältemittelverdichters (4) oder bei Anwendung eines mechanischen Kältemittelverdichters (4) über den Regelstrom eines Regelventils für den Kältemittelverdichters (4) eingestellt wird.

13. Verfahren nach einem der Ansprüche 9 bis 12, **dadurch gekennzeichnet, dass** die Austrittstemperatur (Tₒᵤₜ) des Kältemittels geregelt wird, indem ein Druckverlustkennfeld für den Wärmepumpenverdampfer (3) der Wärmepumpe in der Steuerungs- und Regeleinheit (8) hinterlegt wird und mit Hilfe der Umgebungslufttemperatur (T_{U}) bei Anwendung eines elektrischen Kältemittelverdichters (4) eine maximal mögliche Verdichterdrehzahl des Kältemittelverdichters (4) oder bei Anwendung eines mechanischen Kältemittelverdichters (4) der maximal mögliche Regelstrom eines Regelventils für den Kältemittelverdichter (4) abgeschätzt wird.

14. Verfahren nach einem der Ansprüche 9 bis 13, **dadurch gekennzeichnet, dass** der Kühlerlüfter (9) des Fahrzeugs von der Klimaanlage/Wärmepumpe in Abhängigkeit der Fahrzeuggeschwindigkeit (v_{F}) und/oder von einem Regen- und/oder Feuchtesensorsignal angefordert wird.

## Claims

1. Device (1) for the regulation of a surface temperature level and for the prevention of icing-up of a heat pump evaporator (3) for air conditioning units of vehicles, consisting of a segment (1) of a refrigeration circuit that can be operated both as a heat pump and an air conditioning unit, comprising
• the heat pump evaporator (3), which during operation as an air conditioning unit, in the direction of operation of the air conditioning unit, functions as an air conditioning unit condenser (3),
• an adjustable expansion valve (2) for opening and closing,
• a refrigerant compressor (4),
• refrigerant lines (5) between the expansion valve (2) and the heat pump evaporator (3) and also between the heat pump evaporator (3) and the refrigerant compressor (4),
• a radiator fan (9), which is allocated to the heat pump evaporator (3), which withdraws by suction ambient air (11) at an adjustable flow speed in front of and through the heat pump evaporator (3) and hence permits a steady overflow of the heat pump evaporator surface with ambient air (11),
• a first temperature sensor (6) for detecting the temperature of the refrigerant and also
• a control and regulation unit (8) which, via signal lines (10, 10a, 10b, 10c, 10e) is at least connected to
• the first temperature sensor (6),
• further sensors, measurement signal generators or computer units with calculated values which are designed to detect the ambient air temperature (Tᵤ) and the vehicle speed (V_{F}),
• the expansion valve (2),
• the radiator fan (9) and
• the refrigerant compressor (4),
and has the technical programming means
• for the analysis and processing of the measurement signals from the sensors (6, 7) connected to the control and regulation unit (8) via signal lines (10, 10a),
• for the regulation of the flow cross-section of the expansion valve (2) and the refrigerant compressor (4) as well as
• for the activation of the radiator fan (9) of the vehicle during operation as a heat pump,
**characterised in that**
• the first temperature sensor (6), in the direction of operation of the heat pump, is arranged in front of the heat pump evaporator (3) and
• for regulation of the exit temperature (Tₒᵤₜ) of the refrigerant from the heat pump evaporator (3), a pressure sensor or combined pressure-temperature sensor (7) connected to the control and regulation unit (8) via a signal line (10, 10d) is provided in the refrigerant line (5, 5b), in the direction of heat pump operation downstream of the exit of the heat pump evaporator (3) on the way to the refrigerant compressor (4).

2. Device in accordance with Claim 1, **characterised in that** by way of a further sensor/sensors, a sensor for determining the ambient humidity and/or a rain sensor which detects rain or snowfall is/are present.

3. Device in accordance with Claim 1 or 2, **characterised in that** in the event of provision of a pressure sensor for regulation of the exit temperature (Tₒᵤₜ) of the refrigerant from the heat pump evaporator (3), a second temperature sensor connected to the control and regulation unit (8) via a second signal line (10, 10d) is provided in the refrigerant line (5, 5b), in the direction of heat pump operation downstream of the exit of the heat pump evaporator (3) on the way to the refrigerant compressor (4).

4. Device in accordance with one of Claims 1 to 3, **characterised in that** any pressure losses, in particular through components which are placed between the exit of the heat pump evaporator (3) and the sensor position for determination of the exit temperature (Tₒᵤₜ) of the refrigerant from the heat pump evaporator (3), are stored by characteristic diagram in the control and regulation unit (8).

5. Device in accordance with one of Claims 1 to 4, **characterised in that** a heat exchanger through which refrigerant does not flow through is equipped with a sensor, whereby the sensor is designed to generate a pressure signal which can be used in the regulation of the exit temperature (Tₒᵤₜ) of the refrigerant from the heat pump evaporator (3) for recording measured values.

6. Device in accordance with one of Claims 1 to 5, **characterised in that** the refrigerant compressor (4) is designed as an electric or mechanical compressor, whereby the control and regulation unit (8), when the electric refrigerant compressor (4) is used, is connected via signal lines (10, 10a, 10b, 10c, 10e) to the refrigerant compressor (4) and, when the mechanical refrigerant compressor (4) is used, via signal lines (10, 10a, 10b, 10c, 10e) to a control valve of the refrigerant compressor (4).

7. Device in accordance with Claim 6, **characterised in that** the control and regulation unit (8) has technical programming means
- when the electric refrigerant compressor (4) is used, for the regulation of the speed of the electric refrigerant compressor (4) or
- when the mechanical refrigerant compressor (4) is used, for the regulation of the control valve of the mechanical refrigerant compressor (4).

8. Device in accordance with Claim 6 or 7, **characterised in that** in the control and regulation unit (8), a pressure loss characteristic diagram is stored for the heat pump evaporator (3) and, with the aid of the ambient air temperature (Tᵤ), an estimation of the maximum possible compressor speed where the electric refrigerant compressor (4) is used, or of the maximum possible control flow of the control valve where the mechanical refrigerant compressor (4) is used, can be performed.

9. Method for the regulation of a surface temperature level and for the prevention of icing-up of a heat pump evaporator (3) for air conditioning units of vehicles, whereby a heating of an interior of the vehicle is performed with the aid of a heat pump having a heat pump evaporator (3) which, as a source for the evaporation of a liquid refrigerant, uses ambient air (11), and the heat pump, alongside the heat pump evaporator (3), has at least one refrigerant compressor (4), a condenser and an expansion valve (2) which is connected to the heat pump evaporator (3), which are connected to each other in the named sequence by a refrigerant line (5) supporting a refrigerant circuit, **characterised in that** the regulation of the surface temperature level of the heat pump evaporator (3) and of a flow speed of the ambient air (11) as a function of the ambient air temperature (Tᵤ) in front of the heat pump evaporator (3) takes place in the following process steps:
a) Detection of the ambient air temperature (Tᵤ) or of the air entry temperature into the heat pump evaporator (3) by means of an ambient air sensor or a temperature sensor in the air flow in front of the heat pump evaporator (3),
b) Detection of the entry temperature of the refrigerant by means of a first temperature sensor (6) which is arranged in front of the heat pump evaporator (3) based on the direction of flow of the refrigerant during heat pump operation,
c) Transmission of the recorded measurement signals from the sensors (6, 7) to a control and regulation unit (8), which analyses the recorded measurement signals,
d) Adjustment of the flow speed of the ambient air (11) and the temperature level of the evaporator surface using the following controlling elements:
opening cross section of the expansion valve (2), refrigerant mass flow in the refrigerant line (5) and speed of a radiator fan (9), whereby
i. the flow cross section of the expansion valve (2) is regulated by the control and regulation unit (8) by the opening cross section of the expansion valve (2) being closed sufficiently far that the refrigerant temperature (Tᵢₙ) at the entry into the heat pump evaporator (3) is below the recorded ambient air temperature (Tᵤ) or the air entry temperature into the heat pump evaporator (3) by an interval (ΔTᵢₙ) of between 0 and 5 K, and whereby
ii. the exit temperature (Tₒᵤₜ) of the refrigerant from the heat pump evaporator (3) is regulated by the exit pressure from the heat pump evaporator (3) being adjusted via the refrigerant compressor (4) in such a way that the saturation temperature of the refrigerant associated with the exit pressure, which is determined using characteristic curves and polynomial functions stored in the control and regulation unit (8) or through access to libraries with detailed property data functions, differs by an interval (ΔTₘₐₓ) of between 2 K and 10 k from the ambient air temperature.

10. Method in accordance with Claim 9, **characterised in that** the expansion valve (2) is closed sufficiently far that the refrigerant temperature (Tᵢₙ) at the entrance to the heat pump evaporator (3) is below the ambient air temperature (Tᵤ) or the air entry temperature into the heat pump evaporator (3) by an interval ΔTᵢₙ in the range 0 to 2 K, preferably of ΔTᵢₙ = 1 K.

11. Method in accordance with Claim 9 or 10, **characterised in that** the saturation pressure of the refrigerant associated with the exit pressure, which is determined using characteristic curves or polynomial functions stored in the control and regulation unit (8), or through access to libraries with detailed property data functions, differs by an interval (ΔTₘₐₓ) of 2 to 5 K from the ambient air temperature (Tᵤ).

12. Method in accordance with one of Claims 9 to 11, **characterised in that** the exit pressure from the heat pump evaporator (3), when an electric refrigerant compressor (4) is used, is adjusted via the compressor speed of the refrigerant compressor (4) or, when a mechanical refrigerant compressor is used, via the control flow of a control valve for the refrigerant compressor (4).

13. Method in accordance with one of Claims 9 to 12, **characterised in that** the exit temperature (Tₒᵤₜ) of the refrigerant is regulated by a pressure loss characteristic diagram for the heat pump evaporator (3) of the heat pump being stored in the control and regulation unit (8) and, with the aid of the ambient air temperature (Tᵤ), when an electric refrigerant compressor (4) is used, a maximum possible compressor speed of the refrigerant compressor (4), or, when a mechanical refrigerant compressor (4) is used, the maximum possible control flow of a control valve for the refrigerant compressor (4) being estimated.

14. Method in accordance with one of Claims 9 to 13, **characterised in that** the radiator fan (9) of the vehicle is requested by the air conditioning unit/heat pump depending on the vehicle speed (V_{f}) and/or by a rain and/or humidity sensor signal.

## Revendications

1. Dispositif (1) servant à réguler le niveau de température de surface et à éviter le givrage d'un évaporateur de pompe à chaleur (3) pour la climatisation de véhicules, comprenant une section (1) de circuit de refroidissement utilisable comme pompe à chaleur ou comme climatisation, intégrant
• l'évaporateur de pompe à chaleur (3) qui, en mode climatisation, fonctionne dans le sens climatisation en tant que condensateur de climatisation (3),
• une soupape de détente réglable (2) pour l'ouverture et la fermeture,
• un compresseur de frigorigène (4),
• des conduites de frigorigène (5) entre la soupape de détente (2) et l'évaporateur de pompe à chaleur (3), ainsi qu'entre l'évaporateur de pompe à chaleur (3) et le compresseur de frigorigène (4),
• un ventilateur de refroidissement (9) affecté à l'évaporateur de pompe à chaleur (3) qui aspire, à une vitesse de débit réglable, l'air ambiant (11) en amont de l'évaporateur de pompe à chaleur (3) et à travers lui, permettant ainsi un balayage continu de la surface de l'évaporateur de pompe à chaleur par de l'air ambiant (11),
• un premier capteur de température (6) pour l'acquisition de la température du
frigorigène et
• une unité de commande et de régulation (8) raccordée au moins via des câbles de signaux (10, 10a, 10b, 10c, 10e)
• au premier capteur de température (6),
• à d'autres capteurs, capteurs de mesure ou unités de traitement avec des valeurs calculées conçus pour l'acquisition de la température de l'air ambiant (T_{U}) et de la vitesse du véhicule (V_{F}),
• à la soupape de détente (2),
• au ventilateur de refroidissement (9) et
• au compresseur de frigorigène (4),
et constituant un moyen technique
• pour l'évaluation et le traitement des signaux de mesure des capteurs (6, 7) raccordés à l'unité de commande et de régulation (8) via des câbles de signaux (10, 10a),
• pour la régulation de la section transversale d'écoulement de la soupape de détente (2) et du compresseur de frigorigène (4) et
• pour la commande du ventilateur de refroidissement (9) du véhicule en mode pompe à chaleur,
**caractérisé en ce que**
• le premier capteur de température (6) est disposé dans le sens de travail de la pompe à chaleur en amont de l'évaporateur de pompe à chaleur et que,
• pour la régulation de la température de sortie (Tout) du frigorigène à la sortie de l'évaporateur de pompe à chaleur (3), un capteur de pression ou un capteur combiné de pression-température (7) est raccordé à l'unité de commande et de régulation (8) via un câble de signal (10, 10d) dans la conduite de frigorigène (5, 5b) dans le sens de travail de la pompe à chaleur en aval de la sortie de l'évaporateur de pompe à chaleur (3) en direction du compresseur de frigorigène.

2. Dispositif selon la revendication 1, **caractérisé en ce qu'**un capteur déterminant l'humidité ambiante et/ou un capteur de pluie déterminant les chutes de pluie ou de neige sont prévus en tant que capteurs supplémentaires.

3. Dispositif selon la revendication 1 ou 2, **caractérisé en ce que**, en présence d'un capteur de pression pour la régulation de la température de sortie (Tₒᵤₜ) du frigorigène à la sortie de l'évaporateur de pompe à chaleur (3), un deuxième capteur de pression raccordé à l'unité de commande et de régulation (8) via un autre câble de signal (10, 10d) est prévu dans la conduite de frigorigène (5, 5b) dans le sens de travail de la pompe à chaleur en aval de la sortie de l'évaporateur de pompe à chaleur (3) en direction du compresseur de frigorigène (4).

4. Dispositif selon les revendications 1 à 3, **caractérisé en ce que** d'éventuelles pertes de charge, en particulier du fait de composants positionnés entre la sortie de l'évaporateur de pompe à chaleur (3) et le capteur de température de sortie (Tₒᵤₜ) du frigorigène à la sortie de l'évaporateur de pompe à chaleur (3), sont consignées par champ caractéristique dans l'unité de commande et de régulation (8).

5. Dispositif selon les revendications 1 à 4, **caractérisé en ce qu'**un échangeur de chaleur non traversé par du frigorigène est doté d'un capteur prévu pour générer un signal de pression qui peut être extrait de l'évaporateur de pompe à chaleur (3) lors de la régulation de la température de sortie (Tout) du frigorigène à des fins d'acquisition de la valeur mesurée.

6. Dispositif selon les revendications 1 à 5, **caractérisé en ce que** le compresseur de frigorigène (4) peut être un compresseur électrique ou mécanique, l'unité de commande et de régulation (8) étant alors raccordée au compresseur de frigorigène (4) à l'aide de câbles de signaux (10, 10a, 10b, 10c, 10e) en cas d'utilisation d'un compresseur électrique de frigorigène (4) et à une soupape de réglage du compresseur de frigorigène à l'aide de câbles de signaux (10, 10a, 10b, 10c, 10e) en cas d'utilisation d'un compresseur mécanique de frigorigène.

7. Dispositif selon la revendication 6, **caractérisé en ce que** l'unité de commande et de régulation (8) constitue un moyen technique,
- en cas d'utilisation d'un compresseur électrique de frigorigène (4), de régulation de la vitesse du compresseur électrique de frigorigène (4) ou,
- en cas d'utilisation d'un compresseur mécanique de frigorigène (4), de régulation de la soupape de réglage du compresseur mécanique de frigorigène (4).

8. Dispositif selon les revendications 6 ou 7, **caractérisé en ce qu'**un champ caractéristique de chute de charge est consigné dans l'unité de commande et de régulation (8) pour l'évaporateur de pompe à chaleur (3) et **en ce que**, au moyen de la température de l'air ambiant (T_{U}), une estimation de la vitesse maximale possible du compresseur peut être réalisée pour un compresseur électrique de frigorigène (4), ou bien une estimation du débit maximal possible de la soupape de réglage pour un compresseur mécanique de frigorigène (4).

9. Procédé visant à réguler le niveau de température de et à éviter le givrage d'un surface évaporateur de pompe à chaleur (3) pour la climatisation de véhicules, consistant à chauffer l'habitacle d'un véhicule au moyen d'une pompe à chaleur dotée d'un évaporateur de pompe à chaleur (3) utilisant l'air ambiant (11) comme source pour l'évaporation d'un frigorigène liquide, la pompe à chaleur étant au moins dotée, outre l'évaporateur de pompe à chaleur (3), d'un compresseur de frigorigène (4), d'un condenseur et d'une soupape de détente (2) raccordée à l'évaporateur de pompe à chaleur, ces composants étant raccordés entre eux dans l'ordre indiqué par une conduite de frigorigène (5) constituant un circuit, **caractérisé en ce que** la régulation du niveau de température de surface de l'évaporateur de pompe à chaleur (3) et de la vitesse d'écoulement de l'air ambiant (11) s'effectue en fonction de la température de l'air ambiant (T_{U}) en amont de l'évaporateur de pompe à chaleur (3) selon la séquence suivante:
a) Acquisition de la température de l'air ambiant (T_{U}) ou de la température d'entrée d'air dans l'évaporateur de pompe à chaleur (3) au moyen d'un capteur de température ambiante ou d'un capteur de température dans le flux d'air en amont de l'évaporateur de pompe à chaleur (3),
b) Acquisition de la température d'entrée du frigorigène au moyen d'un premier capteur de température (6) disposé en amont de l'évaporateur de pompe à chaleur (3), en fonction du sens d'écoulement du frigorigène en mode pompe à chaleur,
c) Transmission des signaux de mesure des capteurs (6, 7) à une unité de commande et de régulation (8) qui évalue les signaux de mesure collectés,
d) Réglage de la vitesse d'écoulement de l'air ambiant (11) et du niveau de température de surface de l'évaporateur au moyen de composants de réglage : section d'ouverture de la soupape de détente (2), débit massique du frigorigène dans la conduite de frigorigène (5) et vitesse du ventilateur de refroidissement,
i. la section transversale d'écoulement de la soupape de détente (2) étant réglée par l'unité de commande et de régulation (8) comme suit: la section d'ouverture de la soupape de détente (2) est fermée de manière à ce que la température du frigorigène (Tᵢₙ) à l'entrée de l'évaporateur de pompe à chaleur (3) présente un écart (ΔTᵢₙ) compris entre 0 et 5 K en deçà de la température de l'air ambiant (T_{U}) saisie ou de la température d'entrée d'air dans l'évaporateur de pompe à chaleur (3), et
ii. la température de sortie (Tₒᵤₜ) du frigorigène à la sortie de l'évaporateur de pompe à chaleur (3) étant réglée comme suit : la pression de sortie de l'évaporateur de pompe à chaleur (3) est régulée via le compresseur de frigorigène (4) de manière à ce que la température de saturation du frigorigène correspondant à la pression de sortie, déterminée au moyen des courbes caractéristiques, des fonctions polynomiales ou des bibliothèques stockées dans l'unité de commande et de régulation (8) à l'aide de fonctions de données de substances détaillées, présente un écart (ΔTₘₐₓ) par rapport à la température de l'air ambiant (Tᵤ) de 2 à 10 K.

10. Procédé selon la revendication 9, **caractérisé en ce que** la soupape de détente (2) est fermée de manière à ce que la température du frigorigène (Tᵢₙ) à l'entrée de l'évaporateur de pompe à chaleur (3) présente un écart ΔTᵢₙ compris entre 0 et 2 K, de préférence de ΔTᵢₙ=1 K, en deçà de la température de l'air ambiant (Tᵤ) ou de la température d'entrée d'air dans l'évaporateur de pompe à chaleur (3).

11. Procédé selon la revendication 9 ou 10, **caractérisé en ce que** la température de saturation du frigorigène correspondant à la pression de sortie, déterminée au moyen des courbes caractéristiques, des fonctions polynomiales ou des bibliothèques stockées dans l'unité de commande et de régulation (8) à l'aide de fonctions de données de substances détaillées, présente un écart (ΔTₘₐₓ) par rapport à la température de l'air ambiant (Tᵤ) de 2 à 5 K.

12. Procédé selon l'une des revendications 9 à 11, **caractérisé en ce que** la pression de sortie de l'évaporateur de pompe à chaleur (3) est régulée, en cas d'utilisation d'un compresseur électrique de frigorigène (4), via la vitesse du compresseur de frigorigène (4) ou, en cas d'utilisation d'un compresseur mécanique de frigorigène (4), via le débit de la soupape de réglage du compresseur de frigorigène (4).

13. Procédé selon l'une des revendications 9 à 12, **caractérisé en ce que** la température de sortie (Tₒᵤₜ) du frigorigène est régulée en consignant un champ caractéristique de chute de charge pour l'évaporateur de pompe à chaleur (3) dans l'unité de commande et de régulation (8) et en estimant, en cas d'utilisation d'un compresseur électrique de frigorigène (4), la vitesse maximale possible du compresseur de frigorigène ou, en cas d'utilisation d'un compresseur mécanique de frigorigène (4), le débit maximal possible de la soupape de réglage du compresseur de frigorigène (4) au moyen de la température de l'air ambiant (Tᵤ).

14. Procédé selon l'une des revendications 9 à 13 **caractérisé en ce que** le ventilateur de refroidissement (9) du véhicule est sollicité par la climatisation/la pompe à chaleur en fonction de la vitesse du véhicule (V_{f}) et/ou du signal d'un capteur de pluie et/ou d'humidité.
